Europäisches Patentamt

(19) European Patent Office

Office européen des brevets

(11) Numéro de publication : **0 022 728**
**B1**

(12) **FASCICULE DE BREVET EUROPÉEN**

(45) Date de publication du fascicule du brevet :
**24.11.82**

(21) Numéro de dépôt : **80401061.9**

(22) Date de dépôt : **15.07.80**

(51) Int. Cl.³ : **G 01 P 3/36, G 01 P 3/486,**
**G 01 P 3/54, G 01 D 5/30,**
**H 02 J 13/00**

(54) **Disjoncteur électrique haute tension à indicateur de l'état de fonctionnement.**

(30) Priorité : **16.07.79 FR 7918756**

(43) Date de publication de la demande :
**21.01.81 (Bulletin 81/03)**

(45) Mention de la délivrance du brevet :
**24.11.82 Bulletin 82/47**

(84) Etats contractants désignés :
**BE CH DE GB IT LI NL SE**

(56) Documents cités :
**DE A 2 161 281**
**FR A 2 191 723**
**GB A 1 312 797**
**US A 3 575 129**

**REV. SCI. INSTRUM., vol. 46, no. 7, juillet 1975,**
**New York, USA R. BAILLY-SALINS « Plastic opti-**
**cal fiber displacement sensor for study of the**
**dynamic response of a solid exposed to an**
**intense pulsed electron beam », pages 879-882.**

(73) Titulaire : **MERLIN GERIN**
**Rue Henri Tarze**
**F-38050 Grenoble Cedex (FR)**

(72) Inventeur : **Pinet, Claude**
**Merlin Gerin Rue Henri Tarze**
**F-38050 Grenoble Cedex (FR)**

(74) Mandataire : **Kern, Paul**
**Merlin Gerin Sce. Brevets 20, rue Henri Tarze**
**F-38050 Grenoble Cedex (FR)**

EP 0 022 728 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## Disjoncteur électrique haute tension à indicateur de l'état de fonctionnement

L'invention est relative à un disjoncteur électrique haute tension à enceinte étanche remplie d'un gaz à rigidité diélectrique élevée, notamment de SF6, comprenant, à l'intérieur de ladite enceinte, un équipage mobile portant un contact mobile coopérant avec un contact fixe et un détecteur optique coopérant avec l'équipage mobile pour émettre un signal optique représentatif du déplacement du contact mobile et à l'extérieur de ladite enceinte dans une zone au potentiel de la terre un dispositif de traitement dudit signal optique pour élaborer une mesure dérivée dudit déplacement.

Un disjoncteur connu du genre mentionné (demande de brevet allemand N° 2.161.281) comporte un élément optique, notamment un polariseur solidaire du contact mobile, venant s'interposer sur un rayon lumineux en une position prédéterminée du contact pour fournir un signal optique. Le rayon lumineux s'étend de la zone à potentiel élevé vers la terre à l'intérieur de l'isolateur de support et présente l'avantage de ne pas affecter l'isolation électrique. La transmission par rayon lumineux a toutefois l'inconvénient de nécessiter une enceinte isolée des parasites lumineux.

La présente invention est basée sur la constatation que les capacités de coupure d'un disjoncteur à autosoufflage sont tributaires de la vitesse de déplacement de l'équipage mobile, notamment du contact mobile et elle a pour but de réaliser un dispositif simple et fiable de mesure et de transmission dans une zone au potentiel de la terre d'une information de l'état de fonctionnement du disjoncteur.

Le disjoncteur selon l'invention est caractérisé en ce que ledit détecteur comporte un réseau de dents ou bossages portés par ledit équipage mobile, en étant échelonnés en crémaillère suivant la direction de déplacement de l'équipage mobile, un système optique de lecture disposé sur un support fixe en regard dudit réseau pour émettre un signal optique de fréquence représentative de la vitesse de déplacement du contact mobile, ledit système optique comportant également un câble de transmission à fibres optiques s'étendant entre ledit support dans la zone à potentiel élevé et ledit dispositif de traitement au potentiel de la terre en traversant d'une manière étanche la paroi de ladite enceinte, et que ledit dispositif de traitement est agencé pour comparer le signal optique émis par ledit système optique à une seuil prédéterminé et indiquer l'état de fonctionnement du disjoncteur.

L'emploi du câble de transmission à fibres optiques permet de s'affranchir des parasites présents dans la chambre de coupure du disjoncteur, notamment la lumière de l'arc coupé, les vibrations, le champ électrique, les produits de décomposition du SF6, les poussières, tout en respectant l'isolation électrique. A cet effet et selon un développement important de l'invention, le câble de transmission ne s'étend pas parallèlement aux lignes du champ électrique et la gaine du câble est perforée pour donner accès au SF6 à l'intérieur de la gaine.

Selon un autre développement de l'invention, le câble de transmission comporte des fibres optiques émettrices alimentées en lumière par une source lumineuse extérieure, et des fibres réceptrices raccordées au système optique de lecture, les fibres réceptrices étant disposées concentriquement autour des fibres émettrices. Les fibres optiques du câble de transmission sont réalisées en un matériau plastique à base de métacrylate de méthyle entouré d'un revêtement de polymère fluoré.

Le système de lecture comporte avantageusement trois têtes de lecture coopérant avec un réseau de dents en forme de crémaillère solidaire de l'équipage mobile. La tête médiane fournit l'information de vitesse de déplacement tandis que les têtes externes coopèrent avec les dents d'extrémité de la crémaillère pour une indication de fin de course. Les câbles de transmission traversent d'une manière étanche la paroi de l'enceinte, par exemple le blindage métallique mis à la terre d'un poste blindé.

D'autres avantages et caractéristiques ressortiront plus clairement de l'exposé qui va suivre d'un mode de mise en œuvre de l'invention, donné à titre d'exemple non limitatif et représenté aux dessins annexés, dans lesquels :

la figure 1 est une vue partielle en coupe axiale d'un disjoncteur à autosoufflage équipé d'un capteur optique, selon l'invention ;

la figure 2 est une vue partielle de la crémaillère agencée sur le cylindre d'autosoufflage ;

la figure 3 montre une coupe selon la ligne III-III de la figure 1 ;

la figure 4 représente une tête de lecture vue selon la ligne IV-IV de la figure 1.

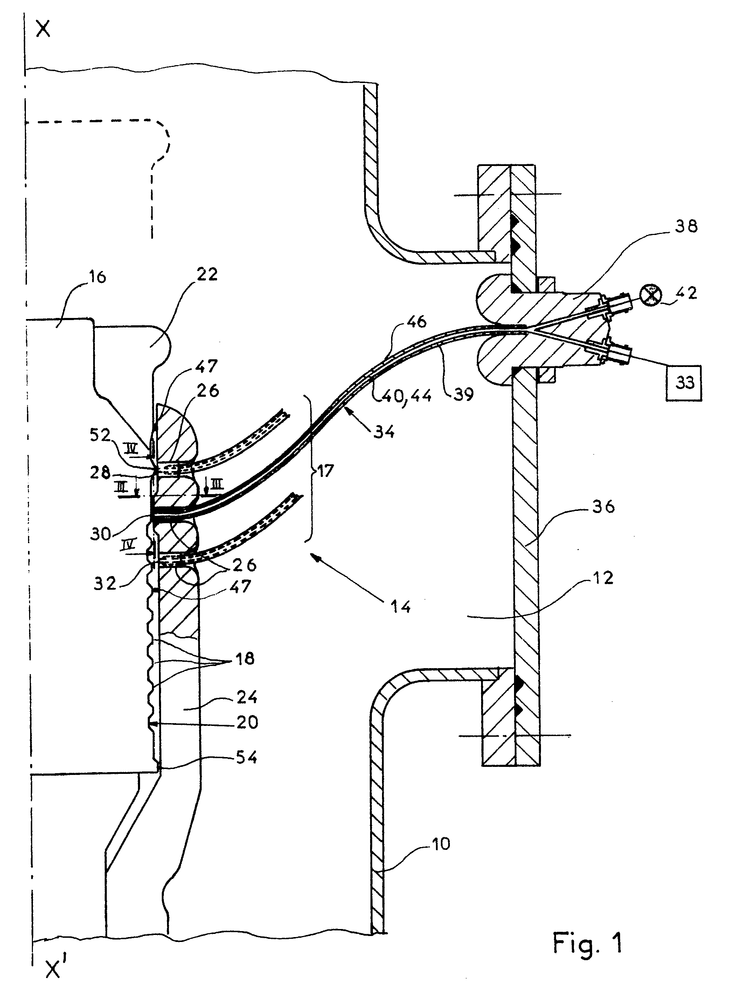

En référence à la figure 1, un disjoncteur blindé haute tension à coupure rapide comporte une enveloppe 10 étanche dont le compartiment 12 interne est rempli d'un gaz isolant à rigidité diélectrique élevée, notamment de l'hexafluorure de soufre sous pression. Le disjoncteur est doté d'un dispositif à autosoufflage à piston — cylindre susceptible d'engendrer un écoulement de gaz de soufflage chassé vers l'intervalle de coupure pour l'extinction de l'arc tiré entre les contacts en position séparée.

Selon l'invention, le disjoncteur est équipé d'un capteur optique 14 agencé à l'intérieur du compartiment 12 pour déterminer la vitesse et le repérage du contact mobile 16 déplaçable selon la direction de l'axe XX' entre les positions extrêmes d'ouverture (traits pleins) et de fermeture (traits en pointillé). Le capteur 14 comporte un système de lecture 17 par exploration optique d'une pluralité de dents 18 ou bossages échelonnés dans la direction de l'axe XX' en formant une crémaillère 20 agencée sur la surface latérale du cylindre 22 mobile de soufflage, solidaire mécaniquement du contact mobile 16. Le système de lecture 17 est porté par un support 24 rigide insensible aux vibrations latérales de la chambre de coupure, et s'étendant le long de la crémaillère 20 à l'extérieur du cylindre 22. Le support 24 fixe est muni d'orifices 26 de logement du système 17 comprenant trois têtes de lecture 28, 30, 32, superposées décalées axialement les unes des autres et disposées en regard des dents 18 de la crémaillère 20. L'extrémité opposée de chaque tête de lecture 28, 30, 32 est connectée à un dispositif de mesure et de traitement 33 extérieur par l'intermédiaire d'un câble de transmission 34 à fibres optiques, traversant le couvercle 36 de l'enveloppe 10 au moyen d'un bouchon 38 d'étanchéité. Les trois têtes 28, 30, 32 et leurs câbles 34 de transmission optique étant identiques, seule la tête centrale 30 sera décrite en détail par la suite. Les fibres émettrices et réceptrices sont séparées dans le bouchon 38.

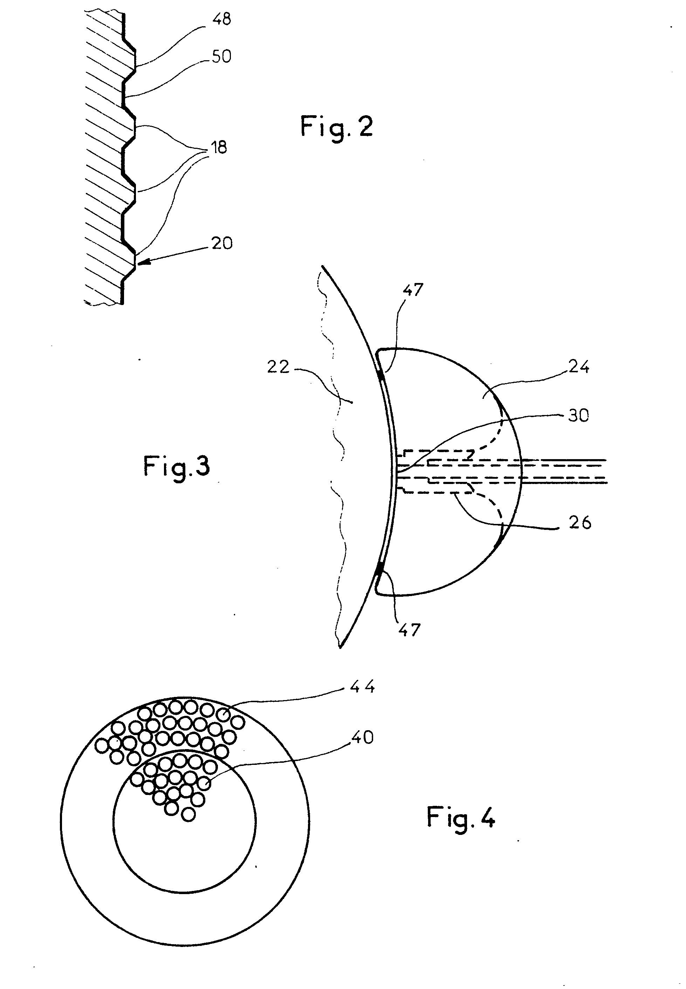

Chaque câble de transmission 34 comprend une âme 39 dotée de fibres émettrices 40 alimentées en lumière par une source lumineuse 42 extérieure, notamment une lampe ou un organe opto-électronique à diode, et de fibres réceptrices 44 raccordées à un élément photoélectrique (non représenté) intégré dans le dispositif de traitement 33. La disposition concentrique des fibres réceptrices 44 autour des fibres émettrices 40 au niveau de la tête de lecture 30 (fig. 4) permet d'augmenter la précision du capteur 14. Le câble 34 est souple et présente une forme de longueur voisine du double de la distance séparant l'enveloppe 10 de la tête de lecture 30, de manière à ne pas s'étendre parallèlement aux lignes du champ électrique.

Les fibres optiques 40, 44 et l'âme 39 présentent un diamètre de 250 microns et sont réalisées en un matériau plastique à base de métacrylate de méthyle entouré d'un polymère fluoré. L'âme 39 est protégée par une gaine 46 tubulaire en polyéthylène percée d'une pluralité de trous (non représentés) permettant l'imprégnation du gaz SF6 entre la gaine 46 et les fibres 40, 44 de l'âme 39. Ces trous sont percés au voisinage du bouchon 38 où le champ électrique est le plus faible.

Le support 24 rigide du système de lecture 17 a une section transversale en forme de croissant (fig. 3) à bords arrondis épousant la surface latérale du cylindre 22 d'autosoufflage de manière à projeter son ombre sur les têtes de lecture 28, 30, 32, rendant le capteur insensible aux parasites lumineux, notamment à la lumière d'arc. Une couronne de poils 47, fixés sur le support 24, entoure les têtes 28, 30 et 32 et affleure la surface des dents 18. Ces poils 47 opaques protègent les têtes de lecture de la lumière d'arc et des dépôts de poussière.

La crémaillère 20 du cylindre 22 d'autosoufflage comporte une succession de dents 18 trapézoïdales de coloration alternée tel que chaque dent 18 présente une arête 48 saillante brillante séparée de l'arête adjacente par un fond 50 recouvert par une couche de peinture noire ou un revêtement obtenu par anodisation. L'intervalle radial entre le fond 50 et l'arête 48 des dents 18 est suffisamment grand pour rendre le capteur 14 insensible aux dépôts de poussière sur la crémaillère 20. Les dents d'extrémité supérieure 52 et inférieure 54 de la crémaillère 20 font saillie des dents 18 intercalaires et coopèrent respectivement avec les têtes de lecture 28, 32 pour indiquer les positions de fin de course d'ouverture et de fermeture de l'équipage mobile du disjoncteur. Ces têtes de lecture 28, 32 fin de course sont agencées dans un même plan parallèle à l'axe XX' et en retrait radial de la tête de lecture centrale 30, destinée à la mesure de la vitesse du cylindre 22. L'interstice radial entre les dents 18 intercalaires de la crémaillère 20 et la tête de lecture 30 centrale est inférieur à celui ménagé par les dents 18 lors de leur passage devant les têtes de lecture d'extrémité 28, 32 durant le déplacement de l'équipage mobile entre les positions extrêmes de fermeture et d'ouverture.

Le fonctionnement du capteur optique 14 de vitesse et de repérage du contact mobile 16 selon l'invention est le suivant :

Lors de l'ouverture du disjoncteur, le défilement des dents 18 intercalaires de la crémaillère 20 devant la tête de lecture 30 centrale est détecté par les fibres réceptrices 44 correspondantes connectées à un élément photoélectrique extérieur qui élabore des impulsions de fréquences proportionnelles à la vitesse de déplacement du cylindre 22 d'autosoufflage et du contact mobile 16 sous tension. Le dispositif de traitement 33 comporte avantageusement un microprocesseur dont l'entrée est raccordée aux éléments photoélectriques et dont la sortie délivre un signal à un système d'affichage numérique. L'indication de la vitesse permet de tester l'état du disjoncteur sous tension nominale et de déceler certaines anomalies dans le dispositif de déplacement de l'équipage mobile, notamment le vérin hydraulique de commande ou le ressort de déclenchement, susceptibles de limiter les performances de coupure du disjoncteur.

Les têtes de lecture 28, 32 fin de course sont insensibles au défilement des dents 18 intercalaires de la crémaillère 20, et détectent uniquement le passage des dents d'extrémités 52 et 54 pour signaler dans le dispositif 33 le repérage du contact mobile, respectivement en position fin de course d'ouverture et de fermeture.

L'invention n'est bien entendu nullement limitée au mode de mise en œuvre plus particulièrement décrit et représenté aus dessins annexés, mais elle s'étend bien au contraire à toute variante restant dans le cadre des équivalences électrotechniques, notamment celle dans laquelle la crémaillère 20 serait agencée sur un autre organe de l'équipage mobile différent du cylindre 22 d'autosoufflage ou celle dans laquelle une seule tête de lecture optique, par exemple 30, serait utilisée pour indiquer à la fois la vitesse et le repérage du contact mobile 16. Les dents intercalaires 18 de la crémaillère 20 et les dents d'extrémités 52, 54 présentent alors des formes ou des dimensions différentes permettant l'identification des données par le dispositif de traitement 33.

## Revendications

1. Disjoncteur électrique haute tension à enceinte (12) étanche remplie d'un gaz à rigidité diélectrique élevée, notamment de SF6, comprenant, à l'intérieur de ladite enceinte, un équipage mobile (16, 22) portant un contact mobile (16) coopérant avec un contact fixe, et un détecteur optique (14) coopérant avec l'équipage mobile (16, 22) pour émettre un signal optique représentatif de déplacement du contact mobile (16), et à l'extérieur de ladite enceinte (12) dans une zone au potentiel de la terre un dispositif de traitement (33) dudit signal optique pour élaborer une mesure dérivée dudit déplacement, caractérisé en ce que ledit détecteur (14) comporte un réseau (20) de dents (18) ou bossages portés par ledit équipage mobile (16, 22), en étant échelonnés en crémaillère suivant la direction de déplacement de l'équipage mobile, un système optique (17) de lecture disposé sur un support (24) fixe en regard dudit réseau (20) pour émettre un signal optique de fréquence représentative de la vitesse de déplacement du contact mobile (16) ledit système optique comportant également un câble de transmission (34) à fibres optiques s'étendant entre ledit support (24) dans la zone à potentiel élevé et ledit dispositif de traitement (33) au potentiel de la terre en traversant d'une manière étanche la paroi (10) de ladite enceinte (12), et que ledit dispositif de traitement (33) est agencé pour comparer le signal optique émis par ledit système optique (17) à un seuil prédéterminé et indiquer l'état de fonctionnement du disjoncteur.

2. Disjoncteur selon la revendication 1, caractérisé en ce que ledit câble de transmission (34) s'étend à l'intérieur de l'enceinte (12) suivant une trajectoire différente et plus longue que celles des lignes de champ électrique.

3. Disjoncteur selon la revendication 2, caractérisé en ce que ledit câble de transmission (34) comporte des fibres optiques émettrices (40) alimentées en lumière par une source lumineuse (42) extérieure à ladite enceinte (12), et des fibres réceptrices (44) disposées concentriquement autour desdites fibres émettrices (40), lesdites fibres (40, 44) étant logées à l'intérieur d'une gaine (46) percée d'une pluralité de trous pour la pénétration à l'intérieur de la gaine (46) dudit gaz isolant contenu dans l'enceinte.

4. Disjoncteur selon la revendication 1, 2 ou 3, caractérisé par le fait que ledit réseau (20) des dents (18) forme une crémaillère à coloration alternée, chaque dent (18) présentant une partie saillante de couleur claire, séparée de la dent adjacente par un fond de couleur sombre.

5. Disjoncteur selon la revendication 4, caractérisé par le fait que ledit détecteur (14) comporte de plus deux systèmes optiques de fin de course (28, 32) coopérant avec les dents d'extrémités (52, 54) de ladite crémaillère (20) et deux câbles additionnels à fibres optiques de transmission à l'extérieur de l'enceinte des signaux émis par lesdits deux systèmes optiques (28, 32).

6. Disjoncteur selon la revendication 3, caractérisé en ce que la hauteur desdites dents d'extrémité (52, 54) est différente de celle des dents (18) intermédiaires.

7. Disjoncteur selon l'une quelconque des revendications précédentes, ayant un dispositif d'autosoufflage, à piston cylindre (22) de compression du gaz isolant pour engendrer un écoulement de gaz de soufflage vers l'intervalle de coupure, caractérisé par le fait que ledit réseau (20) de dents (18, 52, 54) est ménagé sur l'élément mobile (22) du dispositif d'autosoufflage solidaire du contact mobile (16).

8. Disjoncteur selon la revendication 7, caractérisé en ce que ledit support fixe (24) épouse à faible jeu le contour dudit élément mobile (22) et qu'un écran (47) s'étend dans l'intervalle entre le support (24) et l'élément mobile (22) pour protéger le système optique (17) des parasites, notamment de la lumière de l'arc tiré de l'ouverture du disjoncteur.

## Claims

1. High voltage electrical circuit breaker with tight enclosure (12) filled with a high dielectric strength gas, especially SF6, comprising inside said enclosure, a movable contact assembly (16, 22) supporting a moving contact (16) cooperating with a fixed contact, and an optical detector (14) cooperating with the movable contact assembly (16, 22) to emit an optical signal representative of the moving contact (16) displacement, and outside said enclosure (12) in an earthed zone a processing device (33) of said optical signal to elaborate a measurement derived from said displacement, characterized in that said detector (14) comprises a system (20) of teeth (18) or bosses supported by said movable contact assembly (16, 22), and being staggered in a toothed rack in the direction of the movable contact assembly displacement, a reading optical system (17) located on a fixed support (24) facing said system (20) to emit an optical signal of representative frequency of the moving contact (16) displacement speed, said optical system comprising also a transmission cable (34) with optical fibres extending between said support (24) in the high potential zone and said earthed processing device (33), and tightly crossing said enclosure (12) wall (10), and that said processing device (33) is disposed to compare the optical signal emitted by said optical system (17) at a predetermined threshold and to indicate the circuit breaker performance condition.

2. Circuit breaker according to claim 1, characterized in that said transmission cable (34) extends inside the enclosure (12) along a different trajectory longer than the electrical field lines ones.

3. Circuit breaker according to claim 2, characterized in that said transmission cable (34) comprises emitting optical fibres (40) supplied with light by a light source (42) outside said enclosure (12), and receiving fibres (44) concentrically organized around said emitting fibres (40), said fibres (40, 44) being located inside a sheath (46) drilled by multiple holes for the penetration inside the sheath (46) of said insulating gas contained in the enclosure.

4. Circuit breaker according to claim 1, 2 or 3, characterized in that said teeth (18) system (20) forms a toothed rack with alternated colour, each tooth (18) presenting a salient part of light colour, separated from the adjacent tooth by a dark coloured bottom.

5. Circuit breaker according to claim 4, characterized in that said detector (14) comprises further two optical end systems (28, 32) cooperating with the ending teeth (52, 54) of said toothed rack (20) and two additional cables with optical fibres which transmit signals emitted by said two optical systems (28, 32) outside the enclosure.

6. Circuit breaker according to claim 5, characterized in that said ending teeth (52, 54) hight is different from the intermediate teeth (18) one.

7. Circuit breaker according to any of the former claims, having a gas blast device, with a piston cylinder (22) to compress the insulating gas and generate a blowing gas flow towards the break gap, characterized in that said teeth (18, 52, 54) system (20) is accommodated on the moving element (22) of the gas blast device secured to he moving contact (16).

8. Circuit breaker according to claim 7, characterized in that said fixed support (24) fits said moving element (22) outline with loose play and a shield (47) extends in the gap between the support (24) and the moving element (22) to protect the optical system (17) from interferences, especially from the light of the drawn arc when the circuit breaker switches off.

**Ansprüche**

1. Elektrischer Hochspannungsleistungsschalter mit einem dichten, mit einem Gas von hoher dielektrischer Festigkeit, nämlich SF6, gefüllten Gehäuse (12), der im Inneren des genannten Gehäuses mit einem beweglichen Teil (16, 22) versehen ist, welches einen mit einem feststehenden Kontakt zusammenarbeitenden beweglichen Kontakt (16) trägt, und mit einem mit dem beweglichen Teil (16, 22) zusammenarbeitenden optischen Detektor (14) zur Sendung eines die Bewegung des beweglichen Kontakts (16) anzeigenden optischen Signals, und mit einer ausserhalb des genannten Gehäuses (12) in einer Zone auf Erdpotential angeordneten Verarbeitungseinrichtung (33) des genannten optischen Signals versehen ist, um eine von der genannten Bewegung abgeleitete Messung zu erzeugen, dadurch gekennzeichnet, dass der genannte Detektor (14) versehen ist mit einer Reihe (20) von Zähnen (18) oder Beulen, die durch das genannte bewegliche Teil (16, 22) getragen werden und in der Bewegungsrichtung des beweglichen Teiles zahnständig gestaffelt sind, einem optischen auf einem feststehenden Halter (24) gegenüber der genannten Reihe (20) stehenden Lesesystem (17), um ein optisches Signal mit einer die Bewegungsgeschwindigkeit des beweglichen Kontaktes (16) anzeigender Frequenz zu erzeugen, wobei das genannte optische System ebenfalls ein Übertragungskabel (34) mit optischen Fibern aufweist, das sich zwischen dem genannten Halter (24) in der Hochpotentialzone und der genannten auf Erdpotential stehenden Verarbeitungseinrichtung (33) erstreckt und die Wand (10) des genannten Gehäuses (12) dicht durchquert, und dass die genannte Verarbeitungseinrichtung (33) zum Vergleich des durch das genannte optische System (17) gesendeten Signals mit einer vorbestimmten Schwelle und zur Angabe des Betriebszustandes des Schalters ausgebildet ist.

2. Leistungsschalter nach Anspruch 1, dadurch gekennzeichnet, dass das genannte Übertragungskabel (34) sich im Innern des Gehäuses (12) längs einer verschiedenen und längeren Bahn als die der elektrischen Feldlinien erstreckt.

3. Leistungsschalter nach Anspruch 2, dadurch gekennzeichnet, dass das genannte Übertragungskabel (34) versehen ist mit optischen, durch eine äussere Lichtquelle (42) des genannten Gehäuses (12) gespeisten Sendefibern (40) und mit konzentrisch um die genannten Sendefibern (40) liegenden Empfangsfibern (44), wobei die genannten Fibern (40, 44) im Innern einer gelochten Hülse (46) mit mehreren Löchern zum Eindringen ins Innere der Hülse (46) des genannten in dem Gehäuse enthaltenden isolierenden Gases angeordnet sind.

4. Leistungsschalter nach Anspruch 1, 2 oder 3, dadurch gekennzeichnet, dass die genannte Zahnreihe (18, 20) eine abwechselnd gefärbte Zahnstange bildet, wobei jeder Zahn (18) einen hellfarbigen vorspringenden Teil aufweist, der von dem nächstliegenden Zahn einen dunkelfarbigen Grund getrennt ist.

5. Leistungsschalter nach Anspruch 4, dadurch gekennzeichnet, dass der genannte Detektor (14) weiterhin mit zwei optischen Endlagesystemen (28, 32) versehen ist, die mit den Endzähnen (52, 54) der genannten Zahnstange (20) zusammenarbeiten und mit zwei zusätzlichen Kabeln mit optischen Übertragungsfibern, ausserhalb des Gehäuses, der durch die genannten beiden optischen Systeme (28, 32) gesendeten Signale versehen sind.

6. Leistungsschalter nach Anspruch 5, dadurch gekennzeichnet, dass die Höhe der genannten Endzähne (52, 54) von der Zwischenzähne (18) verschieden ist.

7. Leistungsschalter nach irgend einem der vorigen Ansprüche, mit einer Selbstblaseinrichtung mit Kolben und Zylinder (22) zur Kompression des isolierenden Gases und zur Erzeugung eines Gasblasstromes nach dem Löschabstand, dadurch gekennzeichnet, dass die genannte Zahnreihe (18, 52, 54) (20) auf dem beweglichen Teil (22) der an den beweglichen Kontakt (16) gebundenen Selbstblaseinrichtung angeordnet ist.

8. Leistungsschalter nach Anspruch 7, dadurch gekennzeichnet, dass der genannte feststehende Halter (24) den Umfang des genannten beweglichen Teiles (22) mit geringem Spiel umgibt, und dass ein Schild (47) sich zwischen dem Halter (24) und dem beweglichen Teil (22) erstreckt, um das optische System (17) vor den Störungen, nämlich vor dem Licht des beim Öffnen des Leistungsschalters gezogenen Lichtbogens zu schützen.

Fig. 1

Fig. 2

Fig. 3

Fig. 4